**Europäisches Patentamt**

**European Patent Office**

**Office européen des brevets**

(11) Veröffentlichungsnummer: **0 264 719**
**A2**

(12) **EUROPÄISCHE PATENTANMELDUNG**

(21) Anmeldenummer: 87114645.2

(22) Anmeldetag: 07.10.87

(51) Int. Cl.⁴: **F25B 41/00** , F04B 9/10 , F04C 11/00

(30) Priorität: 20.10.86 DE 3635601
16.05.87 DE 3716455

(43) Veröffentlichungstag der Anmeldung:
**27.04.88 Patentblatt 88/17**

(84) Benannte Vertragsstaaten:
**AT BE CH ES FR GB IT LI NL SE**

(71) Anmelder: **Vinz, Peter, Dr.-Ing.**
**Paosostrasse 24a**
**D-8000 München 60(DE)**

(72) Erfinder: **Vinz, Peter, Dr.-Ing.**
**Paosostrasse 24a**
**D-8000 München 60(DE)**

(74) Vertreter: **Vetter, Hans, Dipl.-Phys. Dr. et al**
**Patentanwalte Dipl.-Ing. Rudolf Magenbauer**
**Dipl.-Phys. Dr. Otto Reimold Dipl.-Phys. Dr.**
**Hans Vetter Hölderlinweg 58**
**D-7300 Esslingen(DE)**

(54) **Verfahren und Vorrichtung zum mengengeregelten kontinuierlichen Flüssigkeitsaustausch in Destillationsanlagen und Absorptionskältekreisläufen.**

(57) Die Erfindung betrifft ein Verfahren zum mengengeregelten kontinuierlichen Flüssigkeitsaustausch in Destillationsanlagen und Absorptionskältekreisläufen sowie eine Vorrichtung zur Durchführung des Verfahrens. Bei diesem Verfahren wird einerseits ein in den Hochdruckbereich definiert einzuspeisender Flüssigkeitsmengenstrom an angereicherter Ausgangslösung angehoben, andererseits werden die voneinander getrennten, in der Summe mengengleich aus dem Hochdruckbereich abzuführenden Flüssigkeitsströme des Produktkondensats und der abgereicherten Lösung von einen hohen Druckniveau auf ein niederes Druckniveau übergeführt.

Das Verfahren nutzt in einer Lösungsaustauschvorrichtung die mechanische Energie der druckzuentlastenden, auszufördernden Flüssigkeitsströme für die Einspeisung der angereicherten Ausganglösung und benötigt nur noch eine geringfügige äußere Antriebshilfe zur Überwindung der internen Reibungs-und Überströmungsverluste.

Die druckzuentlastenden Flüssigkeitsströme werden hierfür vor dem mechanischen Energietransfer bis unter die Sättigungstrmperatur ihres jeweiligen Entspannungsniveaus abgekühlt.

Die Vorrichtung arbeitet nach dem Verdrängungsprinzip. Bei Absorptionskältekreisläufen wird sie vorzugsweise mit Kältemitteldampf angetrieben.

## Verfahren und Vorrichtung zum mengengeregelten kontinuierlichen Flüssigkeitsaustausch in Destillationsanlagen und Absorptionskältekreisläufen

Die Erfindung betrifft ein Verfahren für einen mengengeregelten, kontinuierlichen Flüssigkeitsaustausch in Destillationsanlagen und Absorptionskältekreisläufen, nach der Gattung des Anspruches 1 sowie eine Vorrichtung zur Durchführung des Verfahrens.

Bei derartigen Stofftrennanlagen läßt sich eine kontinuierliche Arbeitsweise nur dadurch realisieren, daß einerseits ein definierter Flüssigkeitsmengenstrom an angereicherter Ausgangslösung kontinuierlich in die Trenneinrichtung eingespeist wird und andererseits zwei in der Summe gleich große Flüssigkeitsströme, nämlich die abgereicherte Lösung und das Produktkondensat mengengleich und stetig aus dieser abgeführt werden. Häufig findet diese Stoffgtrennung bei hohen Sättigungsdrücken statt, beispielsweise bei der Trennung von Ammoniak und Wasser im Absorptionskältekreislauf zur Heizwärmeerzeugung bei Sättigungsdrücken zwischen 20 und 30 bar, während die Ausgangslösung mit einem Druck zwischen 1 und 5 bar vorliegt.

In diesen Fällen werden die einzuspeisende Ausgangslösung unter Aufwendung von mechanischer Energie von einem niederen Druckniveau auf das hohe Druckniveau der Stofftrennung angehoben und die auszufördernden Flüssigkeitsströme, in umgekehrter Weise, unter Vernichtung eines ähnlich hohen mechanischen Energiebetrags von dem hohen Druckniveau der Stofftrennung auf das niedere Druckniveau der einzuspeisenden angereicherten Ausgangslösung übergeführt.

Für diesen aus energetischer Sicht unvorteilhaften Füssigkeitsaustausch sind in den heutigen Stofftrennanlagen eine Hochdruckförderpumpe für die Einspeisung der angereicherten Ausgangslösung sowie je ein Drosselventil für die Druckreduzierung der mengengleich auszufördernden Flüssigkeitsströme erforderlich.

Während industrielle Hochdruckdestillationsanlagen überwiegend an einem definierten Lastpunkt betrieben werden und deshalb mit justierten Austauschmengenströmen arbeiten können, müssen bei Absorptionswärmepumpen die Stofftrennleistungen und damit die auszutauschenden Flüssigkeitsmengen stetig dem sich ändernden Bedarf angepaßt werden. Der regelungstechnische Aufwand hierfür ist erheblich und kostenintensiv. Bei Absorptionswärmepumpen kleiner Erzeugerleistung kommt erschwerend hinzu, daß ein definierter Austausch relativ kleiner Flüssigkeitsmengen über vergleichsweise hohe Druckdifferenzen erforderlich ist, wofür zuverlässige, in ihren Mengenströmen regelbare, effiziente, miniaturisierte Förderpumpen und Drosselorgane allerdings fehlen. Für diese Organe wird eine hermetische und robuste Bauweise mit einem akzeptablen Herstellaufwand gefordert.

Bisher konzentrierten sich die Entwicklungen zur Realisierung dieser Elemente nur auf Förderpumpen mit reduziertem Antriebsenergiebedarf, insbesondere Verdrängerpumpen in den verschiedensten Bauweisen, beispielsweise Zahnradpumpen, Membrankolbenpumpen oder Axialkolbenpumpen.

Aus der DE-PS 31 33 387 ist beispielsweise eine Ver drängerpumpe in Axialkolbenbauweise für die Lösungseinspeisung bei Absorptionswärmepumpen kleiner Leistung bekannt, die mit im Hochdruckbereich erzeugten Kältemitteldampf angetrieben wird. Diese Pumpe ist zwar in ihrer Bauweise robust und fördert auch kontinuierlich und über die Hubfrequenz auch bedarfsgerecht. Ihr entscheidender Nachteil ist jedoch, daß sie nicht die beim Lösungsaustausch freiwerdende mechanische Energie als Antriebsenergie nutzen kann und daß somit der Antriebsenergiebedarf der Pumpe nur um die Verluste des elektrischen Antriebs reduziert ist. Außerdem müssen die auszufördernden Flüssigkeitsströme, d. h. die abgereicherte Lösung und das Produktkondensat weiterhin mit hohem regelungstechnischen Aufwand dem Bedarf angepaßt werden.

Ferner ist aus der DE-OS 32 37 030 eine als Axialverdrängermaschine ausgebildete Lösungsaustauschvorrichtung bekannt, bei der die mechanische Energie der auszufördernden abgereicherten Lösung auf die einzuspeisende angereicherte Ausgangslösung übertragen werden soll, um den Antriebsenergiebedarf für die Lösungseinspeisung zu reduzieren.

Dieser Lösungstauscher hat allerdings den Nachteil, daß er intermettierend arbeitet und daß die abgereicherte Lösung während der Druckentlastung zur spontanen Dampf blasenbildung in der Verdrängerkammer neigt, die dem mengengeregelten Lösungsaustausch und der Lebensdauer der Vorrichtung entgegenwirkt. Darüber hinaus ist der vorgeschlagene hermetische elektromagnetische Antrieb weder energiesparend noch kräftemäßig in der Lage, den höheren Mengenstrom der Ausgangslösung unter Berücksichtigung der internen Verluste dieser Vorrichtung und der zusätzlichen Rohrleitungsdruckverluste in den Hochdruckbereich einzuspeisen. Die Vorrichtung nutzt auch nicht den mechanischen Energieanteil des gleichsam stetig auszufördernden und druckzuentlastenden Kältemittelkondensats, so daß für dessen geregelte Einspeisung in den Kältemittelverdampfer weiterhin ein geregeltes Hochdruckreduzierventil benötigt wird.

Aufgabe der Erfindung ist es daher, den Flüssigkeitsaustausch in Destillationsanlagen und Absorptionskältekreisläufen auf energiesparende Weise kontinuierlich und dem jeweiligen Bedarf entsprechend mengenzuregeln und den betriebstechnischen Aufwand hierfür gegenüber den heutigen technischen Lösungen deutlich zu vereinfachen.

Diese Aufgabe wird erfindungsgemäß durch die kennzeichnenden Merkmale des Anspruchs 1 gelöst.

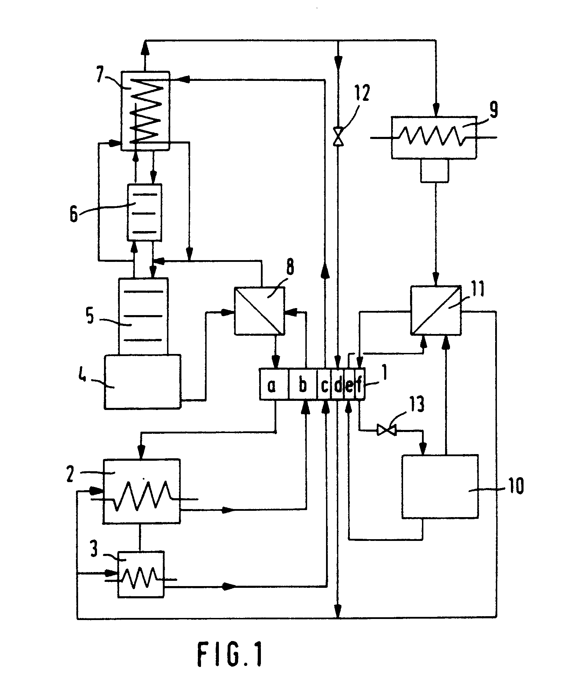

Hierbei erweist es sich, wie in Fig. 1 dargestellt, als besonders vorteilhaft, daß durch den vollständigen mechanischen Energietransfer aller am Austausch beteiligten Flüssigkeitsströme in der volumetrisch fördernden Flüssigkeitsaustauschvorrichtung der Antriebsenergiebedarf für die Einspeisung der angereicherten Ausgangslösung deutlich reduziert wird, wobei mit einer dem mechanischen Energietransfer vorausgehenden Unterkühlung der aus dem Hochdruckbereich abzuführenden, druckzuentlastenden Flüssigkeitsströme die spontane Dampfblasenbildung während ihrer Druckentlastung, innerhalb der Füssigkeitsaustauschvorrichtung mit Sicherheit vermieden wird und der mengengleiche Flüssigkeitsaustausch somit ungestört stattfindet. Die volumetrisch fördernde Flüssigkeitsaustauschvorrichtung bietet darüber hinaus den Vorteil, daß der Antriebsenergiebedarf für die Einspeisung der angereicherten Ausgangslösung nahezu unabhängig von dem zu überwindenden Systemdruckunterschied ist.

Ferner ersetzt die Flüssigkeitsaustauschvorrichtung die mengengeregelte Hochdrucklösungspumpe mit ihrem hohen Antriebsenergiebedarf und die ebenfalls mengengeregelten Drosselventile in den Abströmleitungen des Produktkondensats und der abgereicherten Lösung, die wie die Pumpe, zu den wartungsintensiven Bauteilen dieser An lagen zählen. Die Mengenregelungen dieser Bauteile müssen heute für den kontinuierlichen Anlagenbetrieb mit hohem regelungstechnischen Aufwand synchronisiert werden.

Vorteilhafte Weiterbildungen der Erfindung sowie eine Vorrichtung zur Durchführung ergeben sich aus den Unteransprüchen.

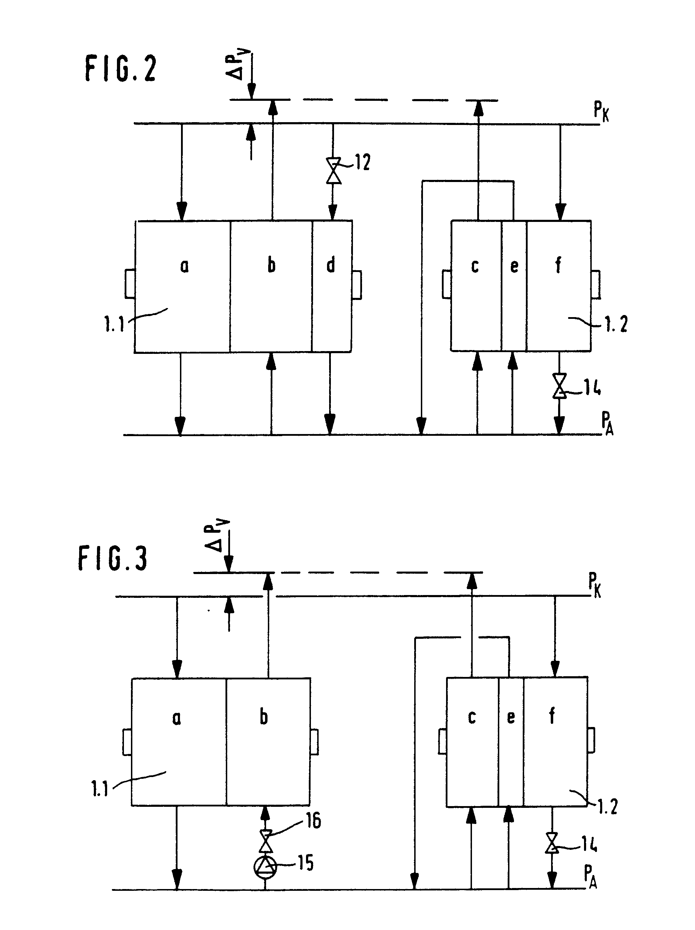

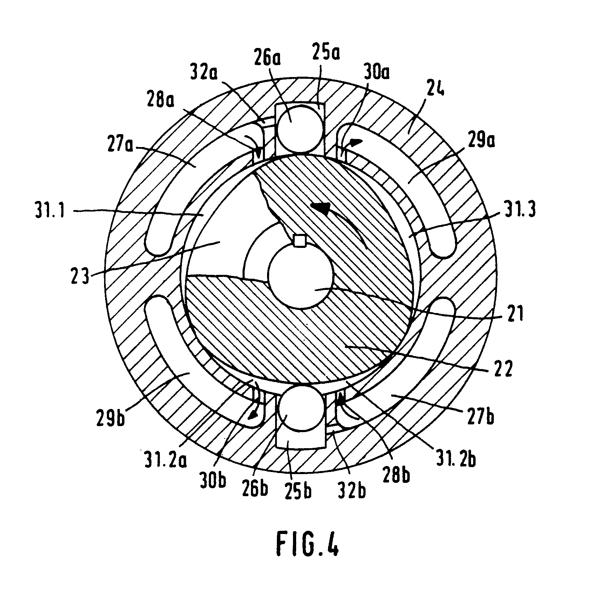

So ist es beispielsweise gemäß Fig. 2 und 3 für großtechnische Anlagen mit hoher Zeitkonstante von besonderem Vorteil, wenn der Flüssigkeitsaustausch in zwei eigenständigen Austauschvorrichtungen stattfindet, wobei in den Vorrichtungen vorzugsweise gleiche Mengenströme gegeneinander ausgetauscht werden und eine der Vorrichtungen vom Produktkondensat und die andere vom abgereicherten Lösungsstrom angetrieben wird. In diesem Fall können die Austauschvorrichtungen zur Bedarfsanpassung mit unterschiedlichen Austauschmengen betrieben und mit Erreichen des Sollwertes wieder miteinander synchronisiert werden. Für Kleinanlagen, beispielsweise für Haushaltabsorberwärmepumpen ist es dagegen kostengünstiger, wenn sämtliche Flüssigkeitsströme in einer Vorrichtung ausgetauscht werden, da bei den hier vorliegenden Zeitkonstanten Flüssigkeitsverlagerungen mit integrierten kleinen Speicherbehältern problemlos ausgeglichen werden können.

Eine weitere besonders vorteilhafte Ausbildung des Verfahrens ergibt sich bei Absorptionskältekreisläufen, wenn die mit der abgereicherten Lösung beaufschlagte Flüssigkeitsaustauschvorrichtung mit aus dem Hochdruckbereich abgezweigtem Produktdampf angetrieben wird, der nach seiner Entspannung in den Niederdruckabsorber geleitet und von der abgereicherten Lösung absorbiert wird. In diesem Fall arbeitet die Flüssigkeitsaustauschvorrichtung mit den geringstmöglichen Betriebskosten. Im Falle der Verwendung des Verfahrens in Destillationsanlagen ohne der Möglichkeit einer Absorption oder Kondensation des Niederdruckdampfes kann der Flüssigkeitsaustauscher entweder mit kondensierbarem fremderzeugten Treibdampf oder mit einer Vordruckerhöhung der in die Flüssigkeitsaustauschvorrichtung einzuspeisenden angereicherten Ausgangslösung angetrieben werden.

Eine vorteilhafte Ausbildung einer Flüssigkeitsaustauschvorrichtung als Rotationsverdrängermaschine ist in Fig. 4 als Querschnittszeichnung dargestellt. In einem zusammengesetzten, hermetisch geschlossenen, zylindrischen Maschinengehäuse sind mehrere separate Förderkammern in Achsenrichtung hintereinander angeordnet und zu den jeweils benachbarten Fördernkammern überströmsicher abgedichtet. In jeder Förderkammer ist ein an seinem Umfang und an den Stirnflächen dichtender rotierender gelagerter Läuferkörper angeordnet, auf dem zwei im Maschinengehäuse, in gegenüberliegenden Längsnuten geführte Verdrängungswälzkörper abrollen. Die Läuferkörper sind hintereinander auf einer gemeinsamen, in den Stirnseitenabschlüssen des Maschinengehäuses gelagerten Welle angeordnet und kraftschlüssig mit der Welle verbunden. Zwischen den einzelnen Läuferkörpern befinden sich, ebenfalls auf der Welle angeordnet, die stirnseitigen Abdichtelemente der einzelnen Förderkammern. Im Maschinengehäuse befinden sich neben den Führungsnuten der Verdrängungswälzkörper, jeweils in Drehrichtung des Läufers vor und hinter den eingesetzten Verdrängungswälzkörpern, axiale Längsschlitze, die bei einer entsprechenden Läuferstellung die umlaufenden Förderräume in den Förderkammern mit den Zu-bzw. Abführungskanälen im Maschinengehäuse verbinden.

Eine pulsationsarme Flüssigkeitsförderung wird auf vorteilhafte Weise dadurch erreicht, daß beispielsweise die im Maschinengehäuse gegenüberliegend angeordneten Verdrängungswälzkörper auf einen Läuferkörper mit jeweils drei um 120° versetzten angeordneten Nocken abwälzen, wobei die Krümmungsänderung von Nocke zu Nocke stetig ist.

Ferner ist es für eine gleichförmige Belastung der Läuferwelle vorteilhaft, wenn die antreibenden Läuferkörper zu den angetriebenen Läuferkörpern auf der Welle um 60° verdreht angeordnet sind.

Bei der Absorptionswärmepumpe, gemäß Fig. 1, können mit einer einzigen Rotationsverdrängermaschine, beispielsweise in jeweils eigenständigen Förderkammern die unterkühlte abgereicherte Lösung, die angereicherte Ausgangslösung, der Treibdampf, das unterkühlte Kältemittelkondensat und der Lösungsabfluß aus dem Kältemittelverdampfer leistungssynchron und über die Maschinendrehzahl mengenmäßig dem Bedarf angepaßt werden. Die Maschinendrehzahl wird in diesem Fall nur über eine Dosierung des Treibdampfes angepaßt.

Bei der Verwendung von zwei Rotationsverdrängermaschinen können in einer Maschine die unterkühlte abgereicherte Lösung und ein mengengleicher Anteil der anreicherten Ausgangslösung unter Mithilfe des Treibdampfes gefördert werden, während in der zweiten Maschine das unterkühlte Kondensat, der Lösungsablauf aus dem Kältemittelverdampfer und der Reststrom der angereicherten Ausgangslösung gefördert werden. Für spezielle Bedürfnisse kann dieser Teilstrom der angereicherten Ausganglösung auch in einer höheren Konzentration vorliegen.

Grundsätzlich eignen sich jedoch für den Flüssigkeitsaustauscher in Rotationsverdrängerbauweise die bekannten rotierenden Verdrängerpumpensysteme, wobei für die Abdichtung der Verdrängerräume nicht nur wälzende sondern auch gleitende Dichtelemente geeignet sind.

Die Erfindung wird beispielsweise anhand der Figuren 1 bis 6 beschrieben. Die Figuren zeigen im einzelnen:

Fig. 1 Die schematische Darstellung des Absorptionskältekreislaufs mit Rotaionsverdrängungslösungstauscher;

Fig. 2 die schematische Darstellung eines zweiteiligen Rotationsverdrängungslösungstauschers mit Treibdampfantrieb;

Fig. 3 die schematische Darstellung eines zweiteiligen Rotationsverdrängungslösungstauschers mit Hilfspumpenantrieb;

Fig. 4 den Querschnitt einer Förderkammer des Rotationsverdrängungslösungstauschers;

Fig. 5 die schematische Darstellung eines Axialkolben-Lösungstauschers mit Treibdampfantrieb;

Fig. 6 die schematische Darstellung eines Axialkolben-Lösungstauschers ohne Hilfsantrieb

Fig. 1 zeigt das Verfahrensfließband des mit einer Flüssigkeitsaustauschvorrichtung nach dem Rotationsverdrängerprinzip kontinuierlich regelbaren $NH_3/H_2O$ Absorptionskältekreislaufs.

Die Rotationsverdrängermaschine (1) ist mit den Förderräumen (1a - 1f) ausgerüstet und kann damit sechs Flüssigkeitsströme leistungssynchron austauschen. Hierfür sind die Förderkammern (1a - 1f) in ihren Kammerlängen den zu fördernden unterschiedlichen Volumenströmen angepaßt.

Die abgereicherte Lösung wird aus dem Austreiber (4) abgezogen, zur Unterkühlung durch den Temperaturwechsler (8) geführt und in die Förderkammer (1a) eingespeist. In der Förderkammer (1a) treibt die unterkühlte, abgereicherte Lösung den internen Läuferkörper an. Sie tritt aus der Förderkammer (1a) druckentlastet aus und wird in den Hauptstromabsorber (2) geleitet. Die im Hauptstromabsorber (2) mit Kältemitteldampf angereicherte ·Lösung wird in gleicher wie die angereicherte Lösung in die Förderkammer (1b) gesaugt, und aus dieser gegen den Austreiberdruck zunächst durch den Temperaturwechsler (8) gefördert und daran anschließend am Kopf in den Rektifikatorabtriebsteil (5) eingespeist.

Die überschüssige angereicherte Lösung wird in den Nebenstromabsorber (3) übergeleitet, in diesem mit weiterem Kältemitteldampf angereichert und anschließend in die Förderkammer (1c) gesaugt. Dieser Teilstrom wird ebenfalls gegen den Austreiberdruck zunächst als Kühlmittel durch den Dephlegmator (7) geführt und anschließend ebenfalls am Kopf in den Rektifikatorantriebsteil (5) eingespeist.

Die Förderkammer (1d) wird mit Kältemitteldampf angetrieben. Dieser wird vor dem Kondensator (9) abgezweigt und über das Treibdampfventil (12) der Förderkammer (1d) zugeführt, in dieser entspannt und dann in die zu den Absorbern (2 und 3) führende Kaltdampfniederdruckleitung eingeleitet und in den Absorbern (2 und 3) absorbiert.

Die Förderkammer (1e) saugt einen leistungsproportionalen Mengenstrom an Kältemittellösung aus dem Verdampfer (10) an und fördert diesen ohne Druckanhebung in den Kondensatunterkühler (11), wo er nahezu vollständig verdampft und nur ein vernachlässigbarer Rest strom schließlich über die Niederdruckkaltdampfleitung in die Absorber (2 und 3) gelangt.

In die Förderkammer (1f) wird Kältemittelkondensat aus dem Kondensator (9) eingespeist, das zuvor in dem Kondensatkühler (11) bis auf wenige Grade über der Sättigungstemperatur des Verdampfers (10) unterkühlt wurde. Das Kältemittelkondensat verläßt die Förderkammer (1f) mit einem geringfügig höheren Druck als er im Verdampfer (10) herrscht. Die restliche Drucküberhöhung wird vor dem Eintritt des Kältemittelkondensats in den Verdampfer (10) in einem Differenzdruckkonstanter (13) abgebaut.

Mit dieser Flüssigkeitsaustauschvorrichtung werden somit sämtliche bisher einzeln zu regelnden und zu synchronisierenden Flüssigkeitsmengenströme des Absorptionskältekreislaufs nur über das regelbare Treibdampfventil (12) bedarfsangepaßt, das im Falle seiner Verwendung in Wärmepumpen als Führungsgröße die Heizwasservorlauftemperatur aufgeschaltet erhält.

Fig. 2 und 3 zeigen in schematischen Darstellungen die alternativen Möglichkeiten des Flüssigkeitsaustauschers mit Rotationsverdrängermaschinen. In Fig. 2 sind die Förderkammern (1a - 1f) auf zwei Rotationsverdrängermaschinen (1.1 und 1.2) aufgeteilt. Während mit der Rotationsverdrängermaschine (1.1) der unterkühlte abgereicherte Lösungsstrom und der mit diesem übereinstimmende, mengengleiche Teilstrom der angereicherten Ausgangslösung unter Zuhilfnahme des Treibdampfes gegeneinander ausgetauscht werden, werden in der Rotationsverdrängermaschine (1.2) das Produktkondensat und der mit diesem Mengenstrom übereinstimmende restliche Teilstrom der angereicherten Ausgangslösung ohne Fremdenergiezufuhr ausgetauscht. Die Antriebsenergie des Produktkondensatstroms reicht zu den aus, um in der gleichen Vorrichtung auch den Lösungsabfluß aus dem Verdampfer (10) zu dosieren.

Beide Rotaionsverdrängermaschinen arbeiten im stationären Gleichgewicht mit synchroner Drehzahl und können zur instationären Lastanpassung ihre Drehgeschwindigkeit ändern. Für diese Möglichkeiten können bei der Maschine (1.1) das Treibdampfventil (12) und bei der Maschine (1.2) das Kondensatventil (14) kontinuierlich geregelt werden. Fig. 3 zeigt den zum Treibdampf alternativen Antrieb der Maschine (1.1) mit einer Vordruckanhebung des einzuspeisenden angereicherten Lösungsstroms. In diesem Fall wird mit der Niederdruckpumpe (15) und dem Regelventil (16) der einzuspeisende Förderstrom der angereicherten Ausgangslösung im Vordruck angehoben und mengenmäßig dosiert.

Ferner zeigen die Fig. 2 und 3 symbolhaft die Druckniveaus und Austauschrichtungen der am Austausch beteiligten Flüssigkeitsströme. Mit $P_K$ ist der hohe Kondensationsdruck und mit $P_A$ der niedere Absorptionsdruck bezeichnet, $\Delta P_V$ kennzeichnet die Maschinen-und Rohrleitungsverluste, die insgesamt den zusätzlichen Antriebsenergiebedarf bedingen.

Fig. 4 zeigt in einer Querschnittsdarstellung den senkrechten Schnitt durch eine der hintereinander angeordneten Förderkammern einer möglichen Bauform der Rotationsverdrängermaschine.

Im Zentrum angeordnet befindet sich die durchgehende Läuferwelle (21), auf der für jede der Förderkammern ein kraftschlüssiger Läuferkörper (22) und die zugehörigen stirnseitigen Abdichtelemente (23) in abwechselnder Reihenfolge angeordnet sind. Die Läuferkörper (22) werden von dem zylindischen Maschinengehäuse (24) umschlossen und können in diesem mit kleinstem Spiel rotieren.

In der Wandung des Maschinengehäuses (24) sind symmetrisch zu den beiden Führungsnuten (25a, 25b), die zur Aufnahme der Verdrängungswälzkörper (26a, 26b) dienen, jeweils davor und dahinter über den Umfang des Maschinengehäuses (24) verteilt, je zwei Einspeisekanäle (27a, 27b) mit Eintrittsschlitzen (28a, 28b), sowie je zwei Ausförderkanäle (29a, 29b) mit Austrittsschlitzen (30a, 30b) angeordnet.

Jede der hintereinander angeordneten Förderkammern hat symmetrisch über den Umfang verteilt, drei rotierende Förderräume (31.1, 31.2, 31.3), die in radialer Richtung innen von der Läuferkontur und außen von der zylindrischen Innenkontur des Maschinengehäuses (24) und in Längsrichtung an ihren Stirnflächen, von den axialen Abdichtelementen (23) begrenzt sind. Von den druckbeaufschlagten Einspeisekanälen (27a, 27b) der Antriebsflüssigkeit bzw. von den druckbeaufschlagten Kanälen der Förderflüssigkeit führen innerhalb des Maschinengehäuses (24) Verbindungskanäle (32a, 32b) zum Grund der Führungsnuten (25a, 25b), so daß die Verdrängungswälzkörper (26a, 26b) von der Druckflüssigkeit hinterspült und vom Flüssigkeitsdruck auf den Läuferkörper (22) gedrückt werden und auf der Läuferoberfläche abrollen können. Dabei dichten die Verdrängungswälzkörper (26a, 26b) innerhalb der Förderkammer jeweils die Hochdruckbereiche gegen die Niederdruckbereiche ab.

Im dargestellten Fall strömt Hochdruckflüssigkeit aus dem Einspeisekanal (27a) über den Eintrittsschlitz (28b) in den Teilförderraum (31.2b), der über den Verdrängungswälzkörper (26b) zum Teilförderraum (31.2a) abgedichtet ist.

Der mit Flüssigkeit gefüllte Förderraum (31.3) wird in der Darstellung gerade über den Austrittschlitz (30a) mit dem Förderkanal (29a) verbunden, so daß mit der Entleerung der druckentlasteten Flüssigkeitsfüllung gerade begonnen wird, während die Befüllung des Förderraumes (31.1) gerade beendet wird. Die Entleerung des Teilförderraumes (31.2a) und die Befüllung des Teilförderraumes (31.2b) ereichen dagegen bei dieser Läuferstellung gerade ihre Maximalwerte.

Mit der Drehbewegung des Läuferkörpers (22) werden auch die Förderräume (31.1-31.3) beim antreibenden Läuferkörper (22) vom Hochdruckbereich in den Niederdruckbereich und beim angetriebenen Läuferkörper (22) vom Niederdruckbereich in den Hochdruckbereich bewegt und die Flüssigkeitsfüllungen mittels des Verdrängungswälzkörper (26a, 26b) ausgefördert. Hierbei ist es günstig, wenn die Maschinengehäuse (24) der treibenden gegenüber denen der angetriebenen Förderkammern um 90° verdreht aneinander gereiht werden, da auf diese Weise die Niederdruckbereiche bzw. die Hochdruckbereiche der einzelnen Förderkammern jeweils aneinander stoßen.

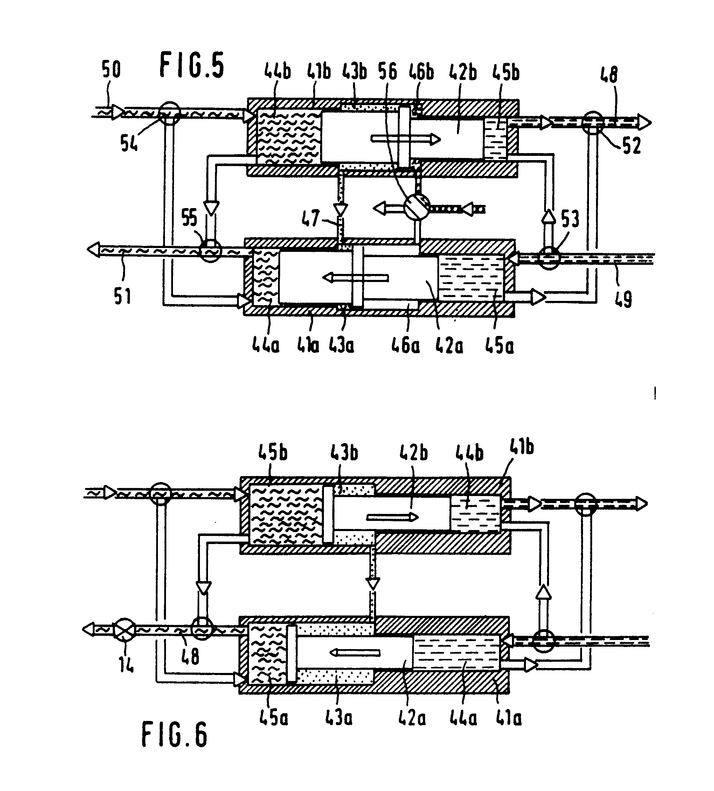

Fig. 5 und Fig. 6 zeigen das Funktionsprinzip der Flüssigkeitsaustauschvorrichtung in der Bauweise einer Axialkolbenmaschine.

Fig. 5 zeigt einen Axialkolben-Lösungstauscher, der einerseits mit der unterkühlten abgereicherten Lösung und andererseits mit einem gleichgroßen Mengenstrom an angereicherter Ausgangslösung beaufschlagt wird und der mit Kältemittelhochdruckdampf angetrieben wird.

Fig. 6 zeigt für den ergänzenden Flüssigkeitsaustausch einen Axialkolben-Lösungstauscher, der vom unterkühlten Kältemittelkondensat und vom restlichen Teilstrom der angereicherten Ausgangslösung beaufschlagt wird. Dieser Lösungstauscher arbeitet ohne Fremdenergieantrieb. Beide Axialkolben-Lösungstauscher sind als Kombination erforderlich, wenn der Energietransfer beim Lösungsaustausch weitestgehend vollständig sein soll.

Aufbau und Funktionsweise des Axialkolben-Lösungstauschers mit Treibdampfantrieb, gemäß Fig. 5, werden nachfolgend beschrieben.

In einem Arbeitszylinder (41a) bewegt sich ein Arbeitskolben (42a), der mit der Innenkontur des Arbeitszylinders (41a) vier Arbeitsräume (43a - 46a) bildet, die sich bei einer axialen Bewegung des Arbeitskolbens (42a) auf der einen Seite vergrößern und auf der anderen Seite verkleinern.

Eine kontinuierliche Förderung wird dadurch erreicht, daß zwei gleichartige Arbeitszylinder (41a, 41b) gegensinnig miteinander gekoppelt sind und im Wechseltakt hin und her bewegt werden. Die Gegenläufigkeit der beiden Arbeitskolben (42a, 42b) wird entweder mechanisch oder wie dargestellt hydraulisch gewährleistet, wobei die Arbeitsräume (43a, 43b) kommunizierend über eine Rohrleitung (47) verbunden sind und beide Arbeitsräume (43a, 43b) und die Rohrleitung (47) mit einem inkompressiblen Medium gefüllt sind.

Die Arbeitsräume (44a, 44b) werden von der angereicherten Lösung beaufschlagt und die gegenüberliegenden Arbeitsräume (45a, 45b) von der unterkühlten abgereicherten Lösung. Wird nun der Arbeitskolben (42a) von seiner rechten Endlage ausgehend nach links bewegt, so bewegt sich der Arbeitskolben (42b) von seiner linken Endlage nach rechts. Dabei füllt sich der Arbeitsraum (45a) bei anstehendem Kondensationsdruck mit unterkühlter abgereicherter Lösung und auf der anderen Seite wird aus dem Arbeitsraum (44a) angereicherte Lösung gegen einen gleichhohen oder höheren Druck ausgefördert. Im selben Arbeitstakt wird im Arbeitszylinder (41b) der Arbeitsraum (44b) bei anstehendem Absorberdruck mit angereicherter Lösung gefüllt und die unterkühlte abgereicherte Lösung bei gleichem Druck aus dem Arbeitsraum (45b) ausgefördert. Mit Erreichen der linken Endlage wird die Bewegungsrichtung der Arbeitskolben (42a, 42b) umgekehrt.

Zur Überwindung der inneren Reibungsverluste der Arbeitskolben und der äußeren Reibungsdruckverluste der Lösungsströme wird dieser Axialkolben-Lösungsaustauscher zusätzlich mit Kältemitteldampf angetrieben. Hierfür stehen wechselseitig die Arbeitsräume (46a, 46b) zur Verfügung. Wird beispielsweise der Arbeitsraum (46b) mit Dampf aus dem Kondensator beaufschlagt, so ist der Arbeitsraum (46a) zum Absorber geöffnet und damit der Arbeitskolben (42a) einseitig entlastet, so daß sich beide Arbeitskolben mit der Dampfeinspeisung aus jeder Position bewegen lassen.

Die Saug-und Druckleitungen der abgereicherten Lösung (48, 49) und der angereicherten Lösung (50, 51) sind mit druckbetätigten Rückflußsperren (52 - 55) gegeneinander verriegelt. Über die Steuereinrichtung (56) läßt sich damit die Fördergeschwindigkeit des kontinuierlich fördernden Axialkolben-Lösungsaustauschers einstellen.

Der vom auszufördernden Kältemittelkondensat angetriebene Axialkolben-Lösungstauscher, gemäß Fig. 6, arbeitet ohne äußere Antriebshilfe und somit auch ohne Arbeitsräume für den Dampfantrieb. Zur Einstellung der Fördergeschwindigkeit und zur Vermeidung der spontanen Dampfblasenbildung während der Druckentlastung in den vom Kältemittelkondensat beaufschlagten Förderräumen (45a, 45b) ist in der Abströmleitung (48) das Kondensatventil (14) angeordnet. Mit diesem Kondensatventil (14) wird der verbleibende Überdruck des Kältemittelkondensats vor dem Eintritt in den Verdampfer abgebaut.

## Ansprüche

1. Verfahren für einen mengengeregelten, kontinuierlichen Flüssigkeitsaustausch in Destillationsanlagen und Absorptionskältekreisläufen, bei dem einerseits ein in den Hochdruckbereich definiert einzuspeisender Flüssigkeitsmengenstrom an angereicherter Ausgangslösung von einem niederen Druckniveau auf ein hohes Druckniveau angehoben wird und andererseits die voneinander getrennten, in der Summe mengengleich aus dem Hochdruckbereich abzuführenden Flüssigkeitsströme des Produktkondensats und der abgereicherten Lösung von einem hohen Druckniveau auf ein niederes Druckniveau übergeführt werden, dadurch gekennzeichnet, daß die in den druckzuenlastenden, auszufördernden Flüssigkeitsströmen enthaltene mechanische Energie auf den im Druck anzuhebenden, einzuspeisenden Flüssigkeitsstrom übertragen wird, daß die druckzuentlastenden Flüssigkeitsströme vor dem mechanischen Energietransfer bis unter die Sättigungstemperatur ihres jeweiligen Entspannungsdruckniveaus abgekühlt werden und daß der mechanische Energietransfer kontinuierlich, in einer nach dem Verdrängungsprinzip arbeitenden Flüssigkeitsaustauschvorrichtung ausgeführt wird.

2. Verfahren nach Anspruch 1, dadurch gekennzeichnet, daß einerseits der Produktkonsatsstrom und anderer seits der abgereicherte Lösungsstrom ihre mechanische Energie in wenigstens einer, vorzugsweise jedoch zwei selbständigen Flüssigkeitsaustauschvorrichtung auf einen, jeweils ihrem Mengenstrom entsprechenden, vorzugsweise gleich großen Teilstrom der angereicherten Ausgangslö sung übertragen.

3. Verfahren nach Anspruch 1 und 2, dadurch gekennzeichnet, daß die Flüssigkeitsaustauschvorrichtung mit zusätzlicher Antriebsenergie versorgt wird und daß diese der mit abgereicherter Lösung beaufschlagten Flüssigkeitsaustauschvorrichtung entweder über aus dem Hochdruckbereich abgezweigten Produktdampf oder über eine dem Flüssigkeitsstrom der angereicherten Ausgangslösung aufgeprägten Vordruckerhöhung zugeführt wird.

4. Vorrichtung zur Durchführung des Verfahrens nach einem der vorhergehenden Ansprüche, dadurch gekennzeichnet, daß zum Energietransfer eine Axialverdrängermaschine (Fig. 5 bzw. Fig. 6) oder eine Rotationsverdrängermaschine (1) vorgesehen ist.

5. Vorrichtung in Rotationsverdrängerbauweise nach Anspruch 4, dadurch gekennzeichnet, daß wenigstens zwei mit Arbeitsräumen zum Pumpen der angereicherten Ausganglösung und zum Antrieb durch das Produktkondensat und/oder durch die abgereicherte Lösung zusammenwirkende rotierende Läuferkörper (22) auf einer gemeinsamen Welle (21) kraftschlüssig angeordnet sind.

6. Vorrichtung nach Anspruch 5, dadurch gekennzeichnet, daß zwei vorzugsweise gegenüberliegend angeordnete Verdrängungs wälzkörper (26a, 26b) jeweils an den Läuferkörpern (22) anliegen, wo die antreibenden und die angetriebenen Läuferkörper (22) vorzugsweise gegeneinander verdreht sind, insbesondere um 60°.

7. Vorrichtung nach Anspruch 5 oder 6, dadurch gekennzeichnet, daß eine zur Innenkontur des Maschinengehäuses (24) hin, jeweils 3, im wesentlichen identische, über dem Umfang verteilte Förderräume (31.1, 31.2, 31.3) bildende Außenkontur des Läuferkörpers (22) vorgesehen ist.

8. Vorrichtung in Axialverdrängerbauweise nach Anspruch 4, dadurch gekennzeichnet, daß zwei gegensinnig miteinander gekoppelte Arbeitszylinder (41a, 41b) mit Verdrängungskolben (42a, 42b) vorgesehen sind, wobei jeweils zu beiden Seiten dieser Verdrändungskolben (42a, 42b), erste und zweite Arbeitsräume (44a, 45a, 44b, 45b) angeordnet sind, daß die ersten Arbeitsräume (45a, 45b) auf einer Seite mit dem Kondensat oder mit abgereicherter Lösung zum Antrieb der Verdrängungskolben (42a, 42b) beaufschlagt sind, während die zweiten Arbeitsräume (44a, 44b), auf der anderen Seite, als Pumpräume für die angereicherte Ausgangslösung ausgebildet sind und daß die Kolben-und Zylinderquerschnitte auf den beiden Seiten unterschiedlich und an die zu fördernden Volumenströme angepaßt sind.

9. Vorrichtung nach Anspruch 8, dadurch gekennzeichnet, daß die miteinander gekoppelten Verdrängungskolben (42a, 42b) mit den Arbeitszylindern (41a, 41b) dritte Arbeitsräume (43a, 43b) bilden, die kommunizierend miteinander verbunden sind.

10. Vorrichtung nach einem der Ansprüche 8 oder 9, dadurch gekennzeichnet, daß die Verdrängungskolben (42a, 42b) in ihrem mittleren Bereich mit den Arbeitszylindern (41a, 41b) vierte Arbeitsräume (46a, 46b) bilden, die über eine Steuervorrichtung (56) alternativ mit einem Druckmedium, vorzugsweise mit Produktdampf für den zusätzlichen Antrieb beaufschlagbar sind.

11. Vorrichtung nach einem der Ansprüche 4 bis 9, dadurch gekennzeichnet, daß in die Ansaugleitung der angereicherten Ausgangslösung zur Druckerhöhung eine Hilfspumpe (15) geschaltet ist.

FIG.1

FIG.2

FIG.3

FIG.4

FIG.5

FIG.6